# EUROPÄISCHE PATENTSCHRIFT

(11) **EP 4 369 256 B1**
(45) Veröffentlichungstag und Bekanntmachung des Hinweises auf die Patenterteilung: **26.08.2026**
(21) Anmeldenummer: 22206975.9
(22) Anmeldetag: 11.11.2022
(51) Int. Cl.: G06N 3/067

(54) **SCHALTUNGSANORDNUNG ZUR VERARBEITUNG VON SIGNALEN MIT EINEM NEURONALEN NETZ**
CIRCUIT ARRANGEMENT FOR PROCESSING SIGNALS WITH A NEURAL NETWORK
CIRCUIT DE TRAITEMENT DE SIGNAUX AVEC UN RÉSEAU NEURONAL

(43) Veröffentlichungstag der Anmeldung: 15.05.2024
(73) Patentinhaber: Technische Universität Braunschweig, 38106 Braunschweig (DE); Ostfalia Hochschule für angewandte Wissenschaften, 38302 Wolfenbüttel (DE)
(72) Erfinder: Müller, Maximilian, 38102 Braunschweig (DE); Kraneis, Robert, 38104 Braunschweig (DE); Agluschewitsch, Vladislav, 38114 Braunschweig (DE); Prof. Dr. Werner, Christian, 38259 Salzgitter (DE); Prof. Dr. rer. nat. Waag, Andreas, 97076 Würzburg (DE)
(74) Vertreter: Kröncke, Rolf

(56) Entgegenhaltungen:
- US-A1- 2019 065 941
- US-A1- 2020 250 534
- US-B2- 11 238 336

## Beschreibung

Die Erfindung betrifft eine Schaltungsanordnung zur Verarbeitung von Signalen mit einem neuronalen Netz, das eine Vielzahl von Knoten hat, wobei jeweils eine Anzahl von Knoten eine gemeinsame logische Schicht bildet und jeder Knoten einer Gruppe von Knoten einer ersten logischen Schicht mit jedem Knoten einer Gruppe von Knoten einer benachbarten zweiten logischen Schicht verbunden ist, und wobei die Knoten der ersten logischen Schicht zur Emission elektromagnetischer Strahlung ausgebildete Sendeelemente und die Knoten der zweiten logischen Schicht zum Empfang elektromagnetischer Strahlung ausgebildete Empfangselemente haben, wobei die Schaltungsanordnung die weiteren Merkmale des Anspruchs 1 aufweist.

Neuronale Netze zur Signalverarbeitung sind hinreichend bekannt. Bei der Realisierung neuronaler Netze auf Hardware-Ebene ist die Realisierung der elektrischen Verbindungen zwischen den einzelnen Knoten von zwei benachbarten Schichten ein Problem, insbesondere wenn eine hohe Anzahl von Vernetzungen benötigt wird. Die Komplexität der Vernetzung steigt dabei quadratisch mit der Anzahl an benachbarten Knoten (Neuronen) an, wodurch die Skalierbarkeit solcher Netzwerke problematisch ist.

Auch das Trainieren eines in Hardware implementierten neuronalen Netzes wird mit steigender Anzahl von parallel gewichteten Verbindungen in konventionellen elektronischen Schaltungen durch die physikalischen Eigenschaften von Leiterbahnen auf einem integrierten Schaltkreis (Chip) schwer realisierbar.

DE 10 2019 220 145 A1 beschreibt ein Verfahren zum Konfigurieren eines neuronalen Netzes, das für eine Inferenz-Hardware trainiert wird, um Hardware-/Softwarefehler der Inferenz-Hardware auszugleichen. Hierbei wird eine Abweichung zwischen Ausgangsdaten einer Trainings-Hardware und Ausgangsdaten der Inferenz-Hardware und Rauschparameter zur Sicherstellung von bitidentischen Ergebnissen auf der Trainings- und Inferenz-Hardware ermittelt.

US 6,513,023 B1 beschreibt eine Schaltung für ein neuronales Netz mit einer Vielzahl von Ladungsspeichern als Größe eines Gewichts eines zugehörigen Netzknotens. Damit können Gewichte durch Speichern von Ladung auf eine Vielzahl von Kapazitäten von Schaltelementen gespeichert und eine Vielzahl von Knoten-Ausgangssignalen in Übereinstimmung mit einer Transferfunktion und den gespeicherten Gewichten erzeugt werden.

US 2022/0044092 A1 offenbart eine Implementierung von Schichten eines neuronalen Netzwerks mit optischen linearen Neuronen (Knoten), die mit einer elektronischen Schaltung als Schnittstelle zwischen den Schichten des neuronalen Netzwerks implementiert sind. Optische Eingangssignale werden mit einem Wellenlängen-Multiplex in einzelne Interferometer-Zweige geleitet, die jeweils eine Eingangszelle und eine Gewichtungszelle mit einem Demultiplexer haben, der die Multiplex-Signale in ihre Wellenlängenkomponenten aufteilt. Ein Multiplexer führt dann diese Wellenlängenkomponenten wieder in ein Multiplex-Signal am Ausgang der Eingangszelle oder der Gewichtungszelle zusammen. Mit einem optischen Amplitudenmodulator wird der absolute Wert des jeweiligen Knotengewichts auf das optische Eingangssignal aufgeprägt.

EP 3 910 690 A1 beschreibt ein neuromorphes Gerät mit einer Halbleiter-Nanostruktur, bei der ein Doppelbarrieren-Quantenmuldenbereich und eine lichtemittierende Region zwischen einer Emitterregion und einer Kollektorregion der Halbleiter-Nanostruktur angeordnet sind. Ladungsträger können durch den Doppelbarrieren-Quantenmuldenbereich tunneln und der lichtemittierende Bereich kann Licht als Reaktion auf den Fluss von Ladungsträgern emittieren.

US 2021/0192330 A1 offenbart ein Neuron mit einer lichtemittierenden Diode, wobei mindestens eine optische Verbindung zwischen dem optischen Ausgang des Neurons und einem optischen Eingang eines zweiten Neurons vorhanden ist. Die mit fotosensitiven Bauelementen erfassten optischen Eingangssignale werden in einem Knoten elektrisch gewichtet und aufsummiert. Hierzu hat ein Neuron eine Vielzahl von fotosensitiven Bauelementen, die jeweils mit einem optischen Lichtleiter an eine zugehörige lichtemittierende Diode eines vorhergehenden Knotens gekoppelt ist.

US 11,144,821 B2 offenbart eine Implementierung eines neuromorphen Rechensystems mit optischen Neuronen, die einen Photodetektor zur Umwandlung eines optischen Anregungssignals in ein korrespondierendes elektrisches Eingangssignal und lichtemittierende Sendeelemente zur Umwandlung eines elektrischen Ausgangssignals in ein korrespondierendes optisches Ausgangssignal hat.

US 2020/0250534 A1 beschreibt ein optoelektronisches Rechensystem mit einer optischen Phase zur Wellenleitung. Das optische Signal wird auf mehrere Knoten verteilt. Es erfolgt ein Multiplexen durch mehrere Wellenlängen mit einer optischen Faser, wobei immer nur ein Knoten mit mehreren Empfangsknoten verbunden ist. Es sind zahlreiche parallele Wellenleiter vorhanden.

US 11,238,336 B2 offenbart eine Schaltung für ein optisches neuronales Netzwerk, bei dem ein gemeinsamer optischer Wellenleiter genutzt wird, um ein WDM-Signal mit unterschiedlichen Wellenlängen durchzuleiten, wobei der "Wavelength-division Multiplexer" (WDM) eine Zuordnungseinheit ist.

US 2019/0065941 A1 offenbart ein neuromprühes Rechensystem, bei dem die einzelnen Schichten über vertikale optische Pfade miteinander gekoppelt sind. Dabei sind immer einzelne direkte Eins-zu-Eins-Verbindungen durch einen Satz vertikaler optischer Vias vorgesehen. Es werden mehrere Schichten zu einem 3D-Stapel zusammengefasst, wobei die Kommunikation über einzelne optische Vias erfolgt.

Ausgehend hiervon ist es Aufgabe der vorliegenden Erfindung, eine verbesserte Schaltungsanordnung zur Verarbeitung von Signalen mit einem neuronalen Netz zu schaffen, das insbesondere als neuromorphes System genutzt werden kann und eine erhebliche Anzahl von miteinander vernetzten Knoten einer großen Komplexität ermöglicht.

Die Aufgabe wird mit der Schaltungsanordnung mit den Merkmalen des Anspruchs 1 gelöst. Vorteilhafte Ausführungsformen sind in den Unteransprüchen beschrieben. Es wird vorgeschlagen, dass die Gruppe von Sendeelementen der ersten logischen Schicht mit der zugehörigen Gruppe von Empfangselementen der benachbarten zweiten logischen Schicht über einen gemeinsamen, elektromagnetische Strahlung durchlassenden Durchlassbereich gekoppelt sind, um von den Sendeelementen jeweils emittierte Strahlung an alle angekoppelten Empfangselemente zu übertragen.

Eine Gruppe von Sendeelementen und/oder Empfangs-elementen von Knoten einer logischen Schicht ist in einer zweidimensionalen Matrix auf einem Substrat angeordnet, wobei ein Substrat jeweils eine logische Schicht des neuronalen Netzes bildet und flächig übereinander gestapelte Substrate das neuronale Netz mit den miteinander verbundenen logischen Schichten bildet. Der gemeinsame Durchlassbereich ist jeweils zwischen einem Paar von flächig aufeinanderliegenden Substraten angeordnet und durch einen Hohlraum mit Luftvolumen oder durch ein aus lichtleitendem Material gebildetes Optikelement gebildet. Erfindungsgemäß sind ferner Steuereinheiten zur Gewichtung der emittierten Strahlung sowie erste und zweite Zuordnungseinheiten zur Sender-Zuordnung der emittierten Signale vorgesehen.

Durch die Nutzung eines gemeinsamen, die elektromagnetische Strahlung durchlassenden Durchlassbereich wird erreicht, dass alle Sendeelemente mit allen über den Durchlassbereich angekoppelten Empfangselementen verbunden sind, ohne dass jeweils einzelne optische oder elektrische Verbindungen erforderlich werden. Dadurch ist eine Vernetzung mit sehr hoher Komplexität auf kleinstem Raum möglich. Die Nutzung eines gemeinsamen Durchlassbereiches, der die zur Aussendung der Signale von den Knoten emittierte elektromagnetische Strahlung insgesamt aufnimmt und durchlässt, hat zudem den Vorteil, dass dieser Durchlassbereich als Summierelement genutzt werden kann, da die von der Anzahl von Sendeelementen eingekoppelte Strahlung (d. h. die Anregungssignale) in dem gemeinsamen Durchlassbereich zusammengefasst wird und als summiertes Signal gleichermaßen an jedes angeschlossene Empfangselement geführt wird.

Bei neuronalen Netzen müssen die Anregungssignale aber einzeln gewichtet werden. Durch den gemeinsamen Durchlassbereich fällt die hierzu erforderliche Diskriminierung bzw. Sende-Empfänger-Zuordnung weg, da die Summierung den Empfangselementen vorgelagert ist.

Daher sind die Sendeelemente mit einer Steuereinheit verbunden, die eine Charakteristik der emittierten Strahlung durch jeweils ein gelerntes Gewicht pro Sendeelement (d. h. pro Knoten) vorgibt. Die Wichtung der einzelnen emittierten Signale wird damit durch eine Charakteristik der Strahlung eingeprägt. Dies kann mindestens eine einzeln oder in Kombination aus der Gruppe ausgewählte Charakteristik sein, von: Lichtstärke (d. h. Strahlungsleistung), Wellenlänge, Polarisation, Pulscharakteristik wie z. B. Pulslänge, Frequenz, Phase und dergleichen.

Weiterhin sind eine erste Zuordnungseinheit mit den Steuereinheiten der Sendeelemente und eine zweite Zuordnungseinheit mit den Empfangselementen verbunden. Die Zuordnungseinheiten sind zur Sender-Zuordnung der von den Sendeelementen emittierten Signale bei den über den gemeinsamen Durchlassbereich angekoppelten Empfangselementen eingerichtet. Die Sende-Empfangs-Zuordnung erfolgt somit durch Zuordnungseinheiten der Sende- und Empfangseinheiten, d. h. in der ersten logischen Schicht und der daran angekoppelten benachbarten zweiten logischen Schicht. Damit gelingt es trotz der vorgelagerten Zusammenfassung der Signale bzw. Übertragung der Signale über einen gemeinsamen Durchlassbereich die elektromagnetisch abgestrahlten Anregungssignale der einzelnen Sendeeinheiten an jedem Empfangsknoten dem jeweiligen Sendeknoten zuzuordnen.

Es kann beispielsweise eine Modulation der Anregungssignale in der sendenden logischen Schicht und eine Demodulation in der empfangenen logischen Schicht vorgesehen sein. Die erste Zuordnungseinheit kann hierbei zur Modulation der von den Sendeelementen emittierten Anregungssignale und die zweite Zuordnungseinheit zur korrespondierenden Demodulation der von den Empfangseinheiten empfangenen modulierten Signale eingerichtet sein.

Die Modulation kann beispielsweise eine Frequenzmodulation, Phasenmodulation, Amplitudenmodulation, Wellenlängenmodulation oder Pulsmodulation (z. B. Pulsweitenmodulation oder Pulscodemodulation) sein.

Denkbar ist aber auch eine Zuordnung durch eine Multiplex-Ansteuerung. Hierzu können die erste Zuordnungseinheit zur Multiplex-Ansteuerung der Sendeelemente und die zweite Zuordnungseinheit zu einem der Multiplex-Ansteuerung korrespondierenden Demultiplex-Auswertung der von den Empfangselementen erfassten Signale eingerichtet sein.

So können beispielsweise die einzelnen Knoten einer sendenden logischen Schicht nacheinander angesteuert werden, um ihre jeweiligen gewichteten Anregungssignale auszusenden. Die Empfangselemente der Knoten der empfangenen logischen Schicht können dann zeitlich hintereinander die Anregungssignale der einzelnen sendenden Knoten empfangen und diesen zuordnen. Diese Multiplex-Ansteuerung kann dann zeitlich nacheinander für jeden Knoten durchgeführt werden, bis alle Knoten einer logischen Schicht ihre Anregungssignale an die nachfolgende empfangene Schicht übertragen haben.

Bei diesem Multiplex-Betrieb, der in Bezug auf die Sendeknoten durchgeführt wird, entfällt die Summiereigenschaft des gemeinsamen Durchlassbereiches. Das Aufsummieren der gewichteten Anregungssignale für die einzelnen Empfangsknoten kann dann jeweils am elektrischen Anschluss der Lichtempfangselemente beispielsweise durch Aufladen einer Kapazität vorgenommen werden.

Wenn das Multiplexen in Bezug auf den Empfangsknoten durchgeführt wird, werden die Signale jeweils mit dem auf den Empfangsknoten bezogenen Gewicht von allen Sendeelementen der angekoppelten Knoten der sendenden logischen Schicht gleichzeitig über den gemeinsamen Durchlassbereich übertragen und dabei aufsummiert. Damit bleiben die verbindungsspezifischen Gewichte zwischen dem jeweils aktuellen Empfangsknoten und den einzelnen Sendeknoten erhalten und fließen durch die Aufsummierung der gewichteten Anregungssignale in das summierte Empfangssignal ein. Dies kann dann für jeden Empfangsknoten wiederholt werden.

Die Zuordnungseinheiten mit ihren daran angeschlossenen, elektromagnetische Strahlung emittierende (d. h. abstrahlende) Sendeeinheiten können zur wellenlängenabhängigen Zuordnung der von jeweils einer Sendeeinheit emittierten Signale bei den Knoten, die über den gemeinsamen Durchlassbereich angekoppelte Empfangseinheiten haben, eingerichtet sein. Die Sendeeinheiten können beispielsweise Leuchtdioden oder Laserdioden, insbesondere vertikal emittierende Laserdioden (VICEL - Vertical Cavity Surface Emitting Laser) sein.

Damit wird die Wellenlänge der einzelnen Sendeeinheiten ausgenutzt und so geregelt, dass eine Zuordnung zwischen dem abgestrahlten optischen Anregungssignal und dem jeweiligen optischen Empfänger im Empfangsknoten möglich ist, zumindest um jeweils einem Empfangsknoten das für diesen bestimmte aufsummierte Signal der angekoppelten Sendelemente der Sendeknoten zuordnen zu können.

Mit Hilfe einer solchen wellenlängenabhängigen Zuordnung lässt sich beispielsweise eine Anregung und eine Abregung von Knoten übermitteln, wenn eine bestimmte Wellenlänge für ein Anregungssignal und eine andere Wellenlänge für ein Abregungssignal steht.

Hierzu bieten sich schmalbändige Leuchtdioden an, die jeweils eine bestimmte Wellenlänge mit einer geringen Bandbreite emittieren. Geeignet sind auch vertikal emittierende Laserdioden VICEL, deren Wellenlänge stromabhängig geregelt werden kann. Die Wellenlänge ist dort im Wesentlichen von der Temperatur abhängig, die wiederum von dem Steuerstrom beeinflusst wird.

Die Steuereinheit kann jeweils einen Ansteuerungstransistor haben, der an ein zugehöriges lichtemittierendes Sendeelement angeschlossen ist. Die Steuereinheit kann dann in Abhängigkeit von der/dem an dem Ansteuerungstransistor anliegenden Steuerspannung oder Steuerstrom und der Transistorkennlinie die Emission einer vorgegebenen Lichtleistung bewirken. Damit wird die Transistorkennlinie zur Vorgabe des Gewichts des emittierten Anregungssignals genutzt. Das Sendeelement wird hierbei durch den Ansteuerungstransistor mit der durch die Kennlinie vorgegebenen Verstärkung angesteuert, sodass auf diese Weise die Strahlungsstärke des Anregungssignals mit der Transistorkennlinie geregelt werden kann. Die Steuerspannung oder der Steuerstrom ist dann das gelernte Gewicht, wobei die Steuerspannung oder der Steuerstrom mit der den Verstärkungsfaktor beeinflussenden Transistorkennlinie zusammenhängt.

Die Steuereinheit kann einen Speicher haben, um die als angelernte Gewichte für den jeweiligen Knoten zur Ansteuerung der zugehörigen Sendeelemente genutzten Ansteuersignale abzuspeichern. Hierzu können beispielsweise die Steuerspannungen oder Steuerströme abgespeichert werden, welche zur Ansteuerung von zugehörigen Ansteuerungstransistoren eines Knotens genutzt werden.

Ein solcher Speicher kann beispielsweise als Speicherkapazität ausgebildet sein, in den die angelernten Gewichte als Steuerspannung abgespeichert sind. Eine solche Speicherkapazität kann beispielsweise mit einem zugehörigen Ansteuerungstransistor eines sendenden Knotens zur Ansteuerung eines Sendeelementes verbunden sein. Die Speicherkapazität kann eine zusätzliche Schaltung zur Ladungserhaltung haben, mit der die abgespeicherte Ladung gegebenenfalls wieder aufgefrischt wird, wenn sich diese durch parasitäre Entladung oder durch Auslesen der Speicherkapazität verringert.

Denkbar ist aber auch die Nutzung von DRAM-Speichern zur Abspeicherung der angelernten Gewichte. Die Gewichte können auch in einem Softwareprogramm eines Mikrocontrollers oder Mikroprozessors vorgehalten werden, der die Ansteuerung optional mit einem Computerprogramm gegebenenfalls unter Zuhilfenahme eines Digital-Analog-Wandlers für die Ansteuerung beispielsweise von Ansteuerungstransistoren vornimmt.

Die Steuereinheit kann zur Pulsweitenmodulation (PWM) der jeweils an die Steuereinheit angeschlossenen Sendeelemente eingerichtet sein. Mit Hilfe einer solchen Pulsweitenmodulation kann die Strahlungsleistung der einzelnen Anregungssignale eingeprägt werden. Zudem kann damit auch eine Pulscodemodulierung vorgenommen werden, um eine Sende-Empfangs-Zuordnung zu ermöglichen.

Das neuronale Netz kann zur bidirektionalen Signalübertragung Knoten der ersten logischen Schicht mit jeweils einem Sendeelement und einem Empfangselement haben, die an denselben Strahlung durchlassenden Durchlassbereich angekoppelt sind. Weiterhin sind Knoten der zweiten logischen Schicht mit jeweils einem Empfangselement und einem Sendeelement vorhanden. Damit können die Knoten der vorher beschriebenen ersten logischen Schicht nicht nur wie bislang dargestellt als Sendeknoten genutzt werden, sondern gleichzeitig auch als Empfangsknoten. Entsprechend können die Knoten der zweiten logischen Schicht nicht nur als Empfangsknoten, sondern auch als Sendeknoten genutzt werden.

Damit hat die vorher beschriebene erste logische Schicht auch die Funktionalität der vorher beschriebenen zweiten logischen Schicht und die vorher beschriebene zweite logische Schicht auch die Funktionalität der vorher beschriebenen ersten logischen Schicht. Die Benennung als erste und zweite Schicht ist damit auch nicht einschränkend auf Sendeschicht oder Empfangsschicht zu verstehen, sondern lediglich im Sinne einer Unterscheidung von zwei miteinander gekoppelten (hintereinander geschalteten) Schichten mit jeweils einer Anzahl von Knoten als logische Schicht bzw. in der Umsetzung mit gestapelten (d. h. geschichteten) Substraten als physische Schicht.

Mindestens eine Schicht kann jeweils ein Paar von Sendeelementen und Empfangselementen haben, die in einander gegenüberliegende Richtungen an jeweils einen gemeinsamen Durchlassbereich angekoppelt sind und zur gewichteten Weiterleitung der von dem Empfangselement empfangenen Anregungssignale über das Sendeelement und den daran angekoppelten Durchlassbereich auf mindestens einem Empfangselement einer benachbarten Schicht zusammengeschaltet sind.

Damit sind Knoten von mindestens einer Schicht so ausgebildet, dass sie abgestrahlte Anregungssignale am Eingang empfangen und Anregungssignale am Ausgang als elektromagnetische Strahlung emittieren können. Sie werden somit an ihrem Eingang und Ausgang mit jeweils einem Durchlassbereich angekoppelt.

Hierbei können die Knoten zusätzlich auch bidirektional sein, sodass an den einander gegenüberliegenden Seiten jeweils ein Paar von Sendeelement und Empfangselement vorhanden ist.

Das neuronale Netz kann mindestens eine Schicht haben, die über die an einen gemeinsamen Durchlassbereich an eine benachbarte Schicht angekoppelte Gruppe von Knoten hinaus noch mindestens einen weiteren Knoten hat, der mit einem weiteren Durchlassbereich zur Weiterleitung der Anregungssignale in Form emittierter elektromagnetischer Strahlung mit der benachbarten Schicht verbunden ist.

Wenn in den Ansprüchen und der Beschreibung von einer Anzahl von Knoten einer Schicht die Rede ist, sind damit nicht notwendigerweise alle Knoten (Neuronen) der Schicht hierunter zu verstehen. Vielmehr bezieht sich dies nur auf die betrachtete Gruppe von Knoten der Schicht, die von Interesse sind. Zusätzliche rein elektrisch funktionierende Knoten oder zusätzliche Gruppen (Stufen) von optisch wirkenden Knoten sind somit nicht ausgeschlossen und können vorteilhaft als Ergänzung des neuronalen Netzes vorhanden sein.

Damit lassen sich beispielsweise unterschiedliche Eigenschaften des neuronalen Netzes zumindest in einzelnen Stufen getrennt voneinander verarbeiten und lernen, ohne dass diese Eigenschaften in den Bereichen des neuronalen Netzes mit anderen Eigenschaften vermischt werden können.

Unter "optisch" wird in diesem Sinne jegliche elektromagnetische Strahlung verstanden, in Abgrenzung zum leitungsgebundenen Elektrodentransport. Derartige "optische" elektromagnetische Strahlung schließt den sichtbaren (400 bis 800 nm) und unsichtbaren Wellenlängenbereich, insb. Ultraviolett (100 bis 400 nm) und Infrarot (800 nm bis 1mm) sowie Röntgenstrahlung (insb. 1 bis 100 nm) ein. Damit ist nicht nur die optische Strahlung im Wellenlängenbereich von 100 nm bis 1mm gemäß DIN 5031 umfasst. Höherfrequente Strahlung, insb. Funkwellen (ab 1 mm) sind durch ihre größere Ausbreitung mit der Notwendigkeit von Abschirmungen weniger geeignet. Der Übergang durch Terahertzstrahlung (30 µm bis 3 mm) ist denkbar, aber bislang noch sehr aufwendig.

Der Durchlassbereich ist als Hohlraum zum Durchlassen der elektromagnetischen Strahlung von der Gruppe von Sendeelementen der ersten Schicht zu der Gruppe von Empfangselementen der benachbarten zweiten Schicht oder als ein lichtleitendes Optikelement ausgebildet, wie bspw. eine für die Wellenlänge der emittierten Strahlung transparente Folie oder Platte. Der Durchlassbereich ist jedoch keine Leitung zur Eins-zu-Eins-Verbindung eines Sendeelementes mit einem zugeordneten Empfangselement, sondern ein gemeinsamer Bereich, der eine Gruppe von Sendeelementen einer ersten Schicht mit einer Gruppe von Empfangselementen einer benachbarten zweiten Schicht gemeinsam verbindet. Mit einem Hohlraum bzw. einer Folie oder Platte kann eine homogene Verteilung der elektromagnetischen Strahlung erreicht werden. Bei elektromagnetischer Strahlung im sichtbaren und unsichtbaren optischen Wellenlängenbereich und Röntgenbereich lassen sich Punktstrahler mit einem Abstrahlwinkel und einem Aspektverhältnis realisieren, die einen geringen Abstand zwischen den benachbarten Schichten, d. h. eine geringe Dicke des Durchlassbereichs im Millimeterbereich (<1 mm bis etwa 5 mm) erlauben.

Der Durchlassbereich kann optional bereichsweise modifiziert sein, um die Abstrahlcharakteristik in verschiedenen Bereichen unterschiedlich voneinander zu beeinflussen, bspw. durch Polarisation. Damit kann eine ungleiche Verteilung der emittierten Strahlung an unterschiedliche Untergruppen von Empfangselementen realisiert werden, um der dem Durchlassbereich inhärenten Summierfunktion für die Anregungssignale Anpassungsfaktoren aufzuprägen.

Die Knoten einer Eingangsschicht können elektrische Anschlüsse für elektrische Eingangssignale haben, die zur gewichteten Ansteuerung der jeweils daran angeschlossenen lichtemittierenden Sendeelemente dienen.

Optional hierzu oder in Kombination hiermit können die Knoten einer Ausgangsschicht mit jeweils einem zugehörigen Empfangselement elektrisch verbundene Anschlüsse für elektrische Ausgangssignale haben.

Damit kann das neuronale Netz zur Verarbeitung von elektrischen Eingangssignalen ausgebildet sein. Es kann auch zur Ausgabe von elektrischen Signalen als Ausgangsgröße des neuronalen Netzes ausgebildet sein.

Bei der Zusammenschaltung mehrerer neuronaler Netze kann eine Ausgangsschicht mit elektrischem Signalausgang gleichermaßen elektrisch an die Eingangsschicht eines folgenden neuronalen Netzes angeschlossen sein.

Denkbar sind aber auch die Verarbeitung "optischer" Eingangssignale in Form von elektromagnetischer Strahlung am Eingang des neuronalen Netzes und die

Bereitstellung "optischer" Ausgangssignale als Verarbeitungsergebnis des neuronalen Netzes am Ausgang des neuronalen Netzes. Dann haben die Eingänge der Knoten der Eingangsschicht Empfangselemente, die zum Empfang elektromagnetischer Strahlung, d. h. nicht zur Aufnahme leitungsgebundener elektrischer Signale, ausgebildet sind. Für eine optionale Ausgabe optischer Ausgangssignale am Ausgang des neuronalen Netzes haben die Knoten an der Ausgangsschicht entsprechend Sendeelemente, die zur Emission elektromagnetischer Strahlung ausgebildet sind. In der Ausgangsschicht kann eine vorherige Gewichtung bei der Ansteuerung der Sendeelemente oder der elektrischen Elemente vorgesehen sein. In einem nicht zur beanspruchten Erfindung gehörenden Beispiel können die an den Knoten der Ausgangsschicht ankommenden summierten Anregungssignale aber auch optional ungewichtet am Ausgang des jeweiligen Knotens der Ausgangsschicht weitergegeben werden.

Die Erfindung wird nachfolgend anhand von Ausführungsbeispielen mit den beigefügten Zeichnungen näher erläutert. Es zeigen:
- Figur 1 -: Skizze eines neuronalen Netzes mit drei Schichten;
- Figur 2 -: Prinzipskizze der Gewichtung und Summierung von Eingangssignalen in einem Knoten mit einer weiteren Funktion zur Generierung eines Ausgangssignals;
- Figur 3 -: Schaltdiagramm einer Ansteuerung eines Sendeelementes in Form einer Leuchtdiode mit einem gewichteten Ansteuerungssignal;
- Figur 4 -: Diagramm des aus den Faktoren A und B bei der Ansteuerung der Transistoren gewonnenen Produkts als Gewichtungsergebnis;
- Figur 5 -: Schaltdiagramm für einen Empfänger eines Knotens zum Empfang elektromagnetischer Strahlung;
- Figur 6 -: Skizze eines aus Matrix-Substraten mit integrierten Mikro-Sende-/Empfangselementen und zwischenliegender Folie gebildeten neuronalen Netzwerks ,
- Figur 7 -: Skizze eines Aufbaus eines neuronalen Netzes mit drei Schichten mit Eingangssignalen und Ausgangssignalen.

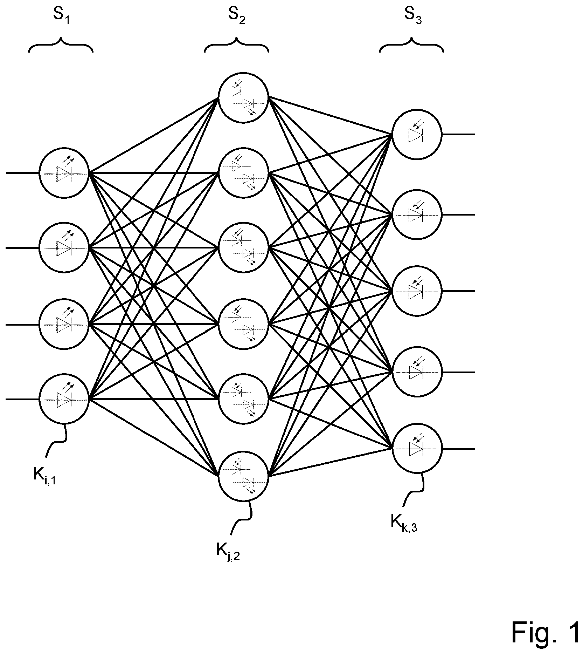

Figur 1 zeigt eine Skizze einer Schaltungsanordnung zur Verarbeitung von Signalen mit einem neuronalen Netz, das beispielhaft aus drei logischen Schichten S₁, S₂, S₃ besteht, welche erfindungsgemäß durch flächig übereinander gestapelte Substrate gebildet werden.

Jede logische Schicht Sᵢ hat eine Vielzahl von Knoten K_{i, 1,} K _{i, 2,} K _{i, 3}.

Jeder Knoten K_{i, j} bildet ein Neuron, wobei in dem dargestellten Ausschnitt des neuronalen Netzes die Verbindungen (Synapsen) zwischen den Neuronen durch Licht erfolgen.

Hierzu hat die erste logische Schicht S₁ beispielsweise als Eingangsschicht Knoten K_{i, 1} mit elektromagnetische Strahlung emittierenden Sendeelementen, wie beispielsweise Leuchtdioden. Erfindungsgemäß erfolgt eine Nutzung eines Mikro-LED-Arrays, bei dem Leuchtdioden für die Sendeelemente und/oder Photodioden/Phototransistoren für die Empfangselemente auf einem Substrat zusammen mit der Ansteuerelektronik als Halbleiterbauelement integriert sind. Die Sende- und/oder Empfangselemente sind dabei auf dem Substrat in einer zweidimensionalen Matrix angeordnet. Insbesondere für die Realisierung einer Zwischenschicht kann zur Verbindung mit einer unter dem Substrat liegenden benachbarten Schicht und einer über dem Substrat liegenden benachbarten Schicht auf der Oberseite und der Unterseite des Substrats jeweils eine Matrix aus Sende- und/oder Empfangselementen angeordnet sein.

Mit einer solchen Gruppe von zur Emission elektromagnetischer Strahlung ausgebildeter Sendeelemente werden die Ausgangssignale der Neuronen der Eingangsschicht S₁ generiert.

Der Eingang dieser Knoten K_{i, 1} kann entweder ein elektrischer Eingang zum Empfangen von elektrischen Signalen oder auch ein optischer Eingang zum Empfangen von Eingangssignalen in Form von elektromagnetischer Strahlung (auch Anregungssignale genannt) haben.

Die verborgene ("hidden") zweite Schicht S₂ hat eine Vielzahl von Knoten K_{i, 2}, die am Eingang jeweils ein Empfangselement zum Empfangen der Anregungssignale der Knoten K_{i, 1} der vorhergehenden Schicht und am Ausgang jeweils ein Sendeelement zum Abstrahlen von Anregungssignalen an die nachfolgende Schicht haben.

Die nachfolgende Schicht kann eine weitere verborgene Schicht in der Arten der zweiten Schicht S₂ mit einer Vielzahl von Knoten K_{i, 3} derselben oder unterschiedlichen Anzahl oder, wie dargestellt, bereits eine Ausgangsschicht S₃ sein. Die Ausgangsschicht hat eine Vielzahl von Knoten K_{i, 3} mit Empfangselementen, um die Anregungssignale der vorhergehenden Schicht S2 zu empfangen. Das Ausgangssignal OUT_{i, 3} wird dann entweder als elektrisches oder als optisches Signal, d. h. als elektromagnetische Strahlung (insb. im Wellenlängenbereich von 10pm bis 1mm, bevorzugt 1 nm bis 50 µm), bereitgestellt.

Es ist erkennbar, dass die aufeinander folgenden logischen Schichten S₁, S₂ bzw. S₂, S₃ Verbindungen zwischen jedem vorhergehenden Knoten K_{i, 1} und jedem nachfolgenden Knoten K_{i, 2} haben. Die Anregungssignale zwischen den einzelnen Knoten K_{i, 1} und K_{i, 2} werden jeweils individuell gewichtet.

Erfindungsgemäß werden die individuellen Verbindungen nun durch einen gemeinsamen Durchlassbereich, der die emittierte elektromagnetische Strahlung durchlässt und durch einen (z. B. luftgefüllten) Hohlraum oder eine lichtleitende Platte gebildet ist, anstelle von einzelnen Lichtleitfasern realisiert. Unter lichtleitend wird in diesem Sinne die Fähigkeit verstanden, die elektromagnetische Strahlung in dem oben genannten Wellenlängenbereich, der auch unsichtbare Strahlung umfasst, von der Gruppe von Sendeelementen zu der benachbarten Gruppe von Empfangselementen der benachbarten Schicht zu transportieren. Damit werden die einzelnen Signale gleichermaßen für alle Empfangsknoten aufsummiert, wenn alle Sendeknoten und alle Empfangsknoten gleichzeitig aktiv sind. Der gemeinsame Durchlassbereich übernimmt damit die Funktion einer Aufsummierung der Eingangssignale für die Empfangsknoten.

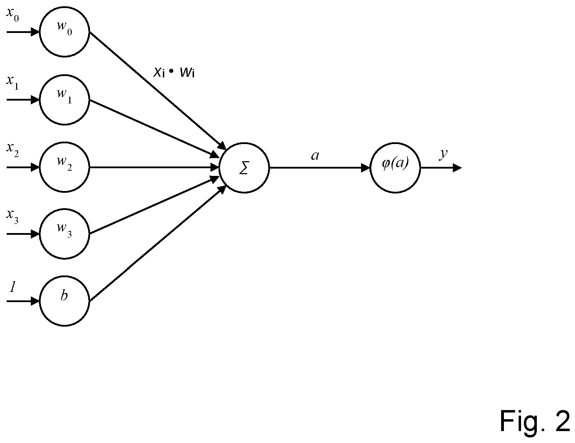

Diese Funktion ist bislang hingegen in den einzelnen Empfangsknoten implementiert. Dies ist aus der Figur 2 zu erkennen, die eine Skizze der Funktion einer Knotens K_{i, j} mit einer Gewichtung von Eingangssignalen (xᵢ · wᵢ) mit den Gewichten wᵢ und eine Aufsummierung der gewichteten Eingangssignale xᵢ · wᵢ zeigt.

In einem Empfangsknoten wird das summierte Eingangssignal dann mit einer Funktion Φ (a) adaptiert, um ein Ausgangssignal Y zu erzeugen.

Es wird deutlich, dass Eingangssignale x₀, x₁, x₂, x₃ und gegebenenfalls Eingangsparameter L jeweils mit einem Gewicht W₀, W₁, W₂, W₃, B des jeweiligen Knotens multipliziert werden. Diese gewichteten Eingangssignale xᵢ · wᵢ werden dann aufsummiert (Σ) und in dem Empfangsknoten dann mit einer dort vorgegebenen Funktion Φ (a) bearbeitet. Die Gewichte wᵢ, b und die Funktion Φ (a) werden in bekannter Weise angelernt. Sie können während des Betriebs weiter adaptiert werden oder als feste Größen eines angelernten neuronalen Netzes vorgegeben sein.

Das Ausgangssignal Y kann an das Ausgangssignal eines Ausgangsknotens am Ende des neuronalen Netzes sein. Denkbar ist aber auch, dass das Ausgangssignal Y eines Knotens an die Knoten der nachfolgenden Schichten weiter gegeben wird. Dann bildet das Ausgangssignal Y jeweils ein Eingangssignal xi, sodass sich die dargestellte Funktionalität in der nachfolgenden Schicht wiederholt.

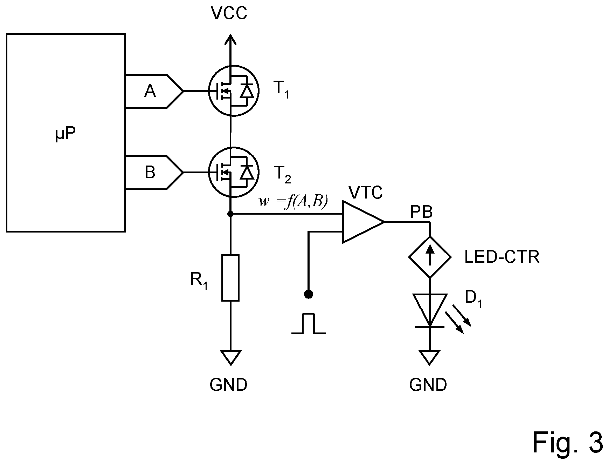

Figur 3 zeigt ein beispielhaftes Schaltdiagramm zur Ansteuerung von Sendeelementen D₁ eines Knotens K_{i, j} mit einem gewichteten Ansteuersignal w = f (A, B), das eine von den Empfangselementen der nachfolgenden Knoten auswertbare charakteristische Eigenschaft von dem Sendeelement D₁ ausgestrahlten Anregungssignals variiert. Dies kann beispielsweise die Strahlungsstärke sein. Somit kann das von einem Knoten abgegebene gewichtete Ausgangssignal ein abgestrahltes Anregungssignal mit einer von der Größe des Eingangssignals und der Gewichtung abhängigen Strahlungsstärke sein.

Das Sendeelement D₁ (LED) kann bspw. mit einem LED-Treiber LED-CTR im optimalen Anhaltspunkt angesteuert werden. Der LED-Treiber LED-CTR kann beispielsweise eine Vielzahl von LEDs eines LED-Arrays ansteuern, sodass mehrere Knoten eine Schicht gleichzeitig mit einem jeweiligen gewichteten Signal angesteuert werden.

Für jeden Knoten erfolgt eine Gewichtung beispielsweise mit einer Reihenschaltung von zwei Transistoren T₁, T₂, mit der zwei Eingangsspannungen A, B miteinander multipliziert werden. Diese Transistoren T₁, T₂ sind an die Betriebsspannung VCC und über einen Widerstand R₁ an Masse GND geschaltet.

Zwischen dem gewichteten Ausgangssignal w = f (A, B) und dem LED-Treiber kann ein Spannungs-Zeit-Konverter VTC vorgesehen sein, um eine Ansteuerspannung in eine Pulsbreite PB umzuwandeln, mit welcher die LEDs betrieben werden.

Die Pulsbreite PB kann durch ein Pulssignal als zweites Eingangssignal des zweiten Spannungs-Zeit-Konverters ("voltage-to-time-converter") beispielsweise durch einen Mikroprozessor geregelt werden.

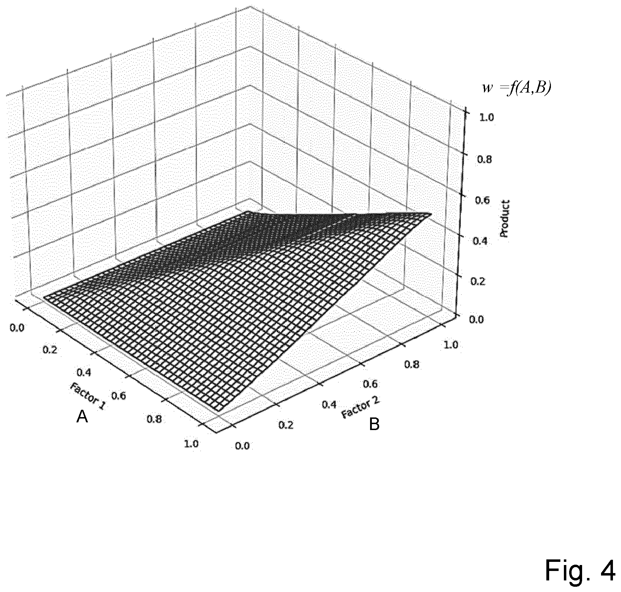

Die Gewichtung kann mithilfe einer Transistorkennlinie durchgeführt werden. hierzu können zwei Transistoren T₁, T₂ in Reihe geschaltet werden. Die Gewichtung entspricht dabei keiner idealen Multiplikation und kann als solche nicht angenähert werden. Das Verhalten ist eine nichtlineare Kennlinie (Produkt w = f (A, B)), die in dem Diagramm nach Figur 4 beispielhaft dargestellt ist.

Eine solche nichtlineare Kennlinie kann für ein "optisches" neuronales Netzwerk dennoch sinnvoll eingesetzt werden, obwohl sie keine ideale Multiplikation bereitstellt. Diese Nichtlinearität wird beim Anlernen des neuronalen Netzes automatisch kompensiert und spielt damit keine Rolle.

Diese dargestellte Schaltungsanordnung mit einer Gewichtung mithilfe von zwei in einer Reihe geschalteten Transistoren unter Ausnutzung der Transistorkennlinie ermöglicht einen Schaltungsaufbau, der mit sehr wenigen Bauteilen auskommt.

Die Schaltungsanordnung kann beispielsweise als integrierte Schaltung auf kleinstem Raum mit einer erheblichen Anzahl Knoten (Neuronen) realisiert werden. Dies ist insbesondere für ein neuromorphes System hilfreich, das sich biologischen Systemen, wie insbesondere der Genstruktur des Menschen mit extrem vielen Neuronen, annähert, welche durch Synapsen verbunden sind.

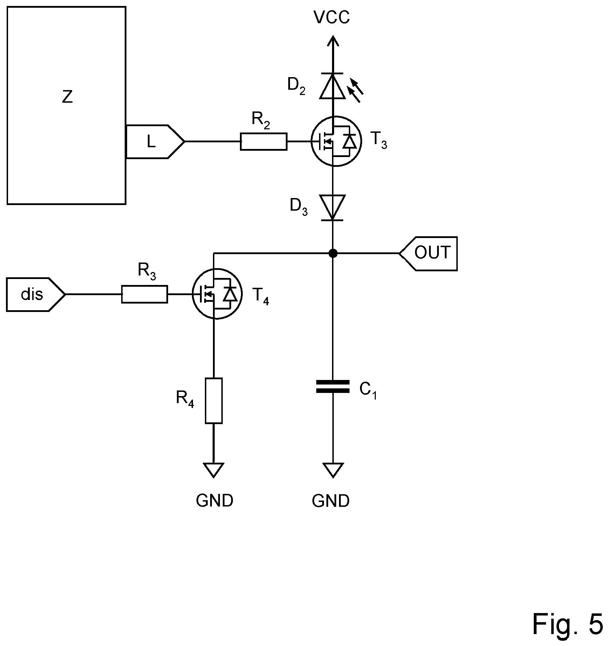

Figur 5 zeigt ein beispielhaftes Schaltdiagramm für ein Empfangselement D₂, das über einen gemeinsamen Durchlassbereich, wie bspw. einem lichtleitenden Optikelement in Form einer Kunststofffolie, von vorhergehenden Knoten empfangene optische Signale in ein elektrisches Signal umwandelt. Die abgestrahlten Anregungssignale der Sendeelemente LEDs der vorhergehenden Knoten der vorherigen Schicht werden detektiert, aufsummiert und in einen Strom umgewandelt. Dazu wird beispielsweise eine Fotodiode im Solarzellenmodus verwendet.

Dieses für elektromagnetische Strahlung sensitive Empfangselement D₂ ist mit einer Anode an die Versorgungsspannung VCC geschaltet.

Auf der anderen Seite ist die Kathode mit dem Eingang eines Transistors T₃ verbunden. Hierbei handelt es sich um einen Schalttransistor, welcher mittels eines TDM-Verfahren das Laden eines Neurons freigibt oder sperrt. Dies wird durch das Steuersignal L (load) über einen Widerstand R₂ gesteuert.

Der Schalttransistor T₃ ist mit einer Diode D₂ verbunden, die als Sperrdiode dient, um ein ungewolltes Entladen des nachfolgenden Kondensators C₁ zu verhindern.

Der Kondensator C₁ und die Anode der Sperrdiode D₂ sind mit ihrer Kathode an den Drain-Anschluss des weiteren Transistors T₄ geschaltet, der über einen Widerstand R₃ an seinem Gate mit einem Signal dis angesteuert wird. Der Source-Anschluss des weiteren Transistors T₄ ist über einen Widerstand R₄ an Masse GND geschaltet.

Damit wird der Kondensator C₁ über den Entladewiderstand R₄ aktiv entladen, wenn das Zurücksetzen der Aktivierung erforderlich ist, wie z. B. bei Beendigung der Netzwerkberechnung.

Die Aktivierung des Neurons über die Aufsummierung der empfangenen gepulsten Lichtsignal der vorherigen Schicht mit der Fotodiode D₂ erfolgt in den TDM-Phasen ("Time Division Multiplex Phases"), in denen das Laden des Neurons über das freigegebene Signal L (load) freigegeben wird. Die von der Fotodiode D₁ in Abhängigkeit von der aufgenommenen Lichtenergie durchgelassene Energie, d. h. der Stromfluss, wird in dem Kondensator C₁ gesammelt. Die nach dem Abschluss des Ladevorgangs am Kondensator vorliegende Spannung OUT bildet dann das Ausgangssignal.

Die Ansteuersignale L und dis werden beispielsweise mittels einer digitalen Elektronik (Z. B. Mikroprozessor, Mikrocontroller) erzeugt, sodass pro Zeitschlitz genau ein Neuron geladen wird, die Aktivierung innerhalb der gesamten Netzbreite gespeichert wird und am Ende eine Berechnung mithilfe des Schalttransistors T₄ über das Rücksetzsignal dis zurückgesetzt wird. Damit wird ein Teil der Zuordnungseinheit Z gebildet, die mit Hilfe der Ansteuerungssignale L und dis durch Aktivierung eine einzelne Ansteuerung der Empfangselemente und damit eine Sender-Empfänger-Zuordnung ermöglicht.

Die Time-Division-Multiplex-Ansteuerung TDM sorgt für eine zeitliche Selektion der Neuronen (Knoten) der nächsten Netzwerkschicht. Zu einem Zeitpunkt wird genau ein Neuron der folgenden Schicht bearbeitet. Das heißt, es wird immer ein Lichtempfangselement D2 eines Knotens K i. j der Empfangsschicht aktiviert und die über das gemeinsame lichtleitende Optikelement aufsummierten Lichtsignale der vorhergehenden Knoten in dem Kondensator C1 gesammelt. Die zeitliche Funktion für die TDM-Ansteuerung der einzelnen Knoten einer Schicht zeitlich nacheinander kann beispielsweise durch Digital-Elektronik, beispielsweise durch einen geeignet programmierten Mikrocontroller oder Mikroprozessor, und einer damit veranlassten Ansteuerung der Schalttransistoren T3 für jeden Knoten (Neuron) ermöglicht werden.

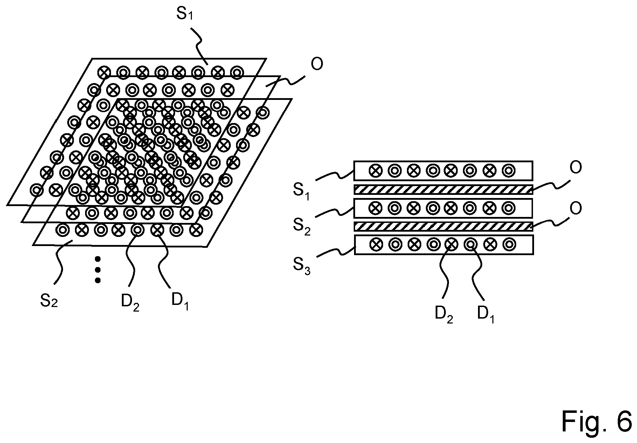

Die dargestellten Schaltungsanordnungen werden mit einem LED-Array genutzt. Dies ist in der Figur 6 skizziert. Dabei handelt es sich um eine gleichmäßige zweidimensionale Anhäufung sogenannter Mikro-LEDs. Die einzelnen Mikro-LEDs nehmen Größen im Mikrometerbereich an, wie beispielsweise 5 - 100 m, und können quadratische Formen (Rechtecke) annehmen (Rechtecke, Kreise...). Das gesamte Mikro-LED-Array besitzt eine Vielzahl von Mikro-LEDs. Der P-Kontakt zu jeder LED ist mittels Leiter nach außen geführt, um die jeweilige LED elektrisch anzusteuern. Die LEDs lassen sich damit wie dargestellt an ihrer Anode mit einer jeweiligen Steuerschaltung ansteuern. Sie lassen sich direkt adressieren. Die LEDs besitzen einen gemeinsamen N-Kontakt, welcher mittels mindestens eines Kontakts nach außen gelegt ist. Somit ist das LED-Array auf eine Platine elektrisch ansteuerbar.

Die einzelnen logischen Schichten S₁, S₂, S₃ werden dabei durch Substrate gebildet, auf denen einseitig oder beidseitig eine zweidimensionale Matrix mit Paaren von Sendeelementen D1 und Empfangselementen D2 als Halbleiterbauelement integriert sind. Diese Substrate können dann als Module auf Elektronikleiterplatten bzw.

Elektroniksubstraten aufgebraucht werden oder zusammen mit der Ansteuerelektronik integriert sein.

Die Substrate werden dann übereinander gestapelt, wobei der Durchlassbereich O zwischen den jeweils übereinander liegenden Substraten gebildet wird. Der Durchlassbereich O wird durch rahmenförmige Abstandselemente zur Bereitstellung eines Luft-Hohlraums oder durch eine zwischenliegende für den Strahlungswellenlängenbereich transparente Folie oder Platte realisiert. Eine solche Folie bzw. Platte bilden dann ein lichtleitendes Optikelement. Bei der Integration von Sende-/Empfangselementen in der Größenordnung von 10 nm bis 1 µm ist das Aspektverhältnis auch bei dünnen Folien bei einem geringen Abstand von 1 bis 5 mm, bevorzugt 1 bis 2 mm, gewahrt, um eine homogene Verteilung der emittierten Strahlung zu allen Empfangselementen der benachbarten Schicht sicherzustellen. Denkbar ist dabei auch, unterschiedliche Bereiche des Durchlassbereiches vorzusehen, um bspw. durch verschiedene Polarisationen oder sonstige bereichsweisen Änderungen die abgestrahlten Anregungssignale zu den Empfangselementen der benachbarten Gruppe ungleich zu verbreiten. Damit können unterschiedliche Faktoren für Untergruppen von Sendeelemente bzw. Empfangselementen in die dem Durchlassbereich immanente Summierfunktion bei der Durchleitung mehrerer Anregungssignale gleichzeitig an das mindestens eine Empfangselement eingeprägt werden.

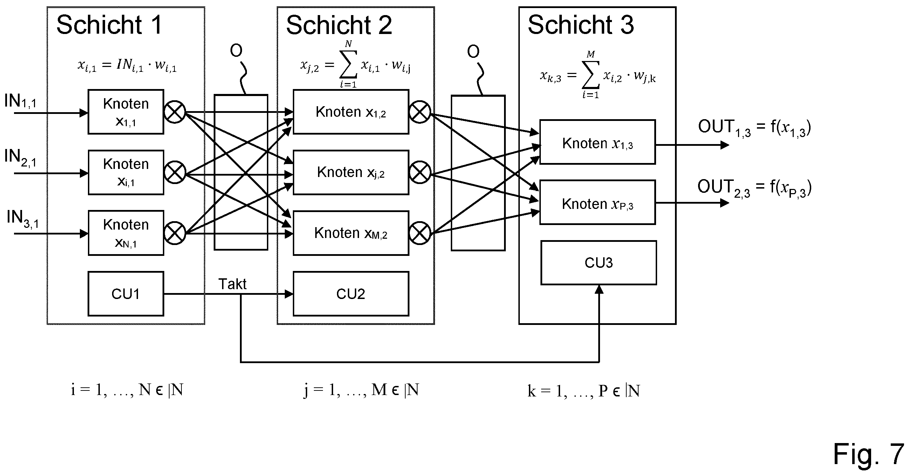

Figur 7 zeigt eine Skizze einer Schaltungsanordnung zur Verarbeitung von Signalen mit einem vorher beschriebenen neuronalen Netz.

Hier sind wiederum beispielhaft drei Schichten S₁, S₂, S₃ dargestellt. Es können genauso gut aber auch nur zwei Schichten oder mit weiteren verborgenen Schichten mehr als drei Schichten vorhanden sein.

Die Anzahl der Knoten in den einzelnen Schichten muss nicht gleich sein. Sie kann pro Schicht individuell festgelegt sein und von Schicht zu Schicht variieren. Dies ist im Übergang der zweiten Schicht S₂ zur dritten Schicht S₃ von drei Knoten zu zwei Knoten skizziert.

Die erste Schicht S₁ dient als Eingangsschicht. Dort werden die Eingangssignale INⱼ in die jeweiligen Knoten x_{i, 1} eingeleitet.

Hierbei kann es sich um elektrische oder "optische" Signale handeln.

Die Knoten der Eingangsschicht S₁ haben elektromagnetische Strahlung emittierende Sendeelemente LEDs, die beispielsweise Mikro-LEDs eines LED-Arrays sein können. Sie werden jeweils individuell angesteuert, um ein gewichtetes Lichtsignal für jeweils einen nachfolgenden Knoten der nachfolgenden Schicht S₂ zu erzeugen.

Das gewichtete Ausgangssignal wird durch die Gleichung ${x}_{i , j} = {IN}_{i , 1} ⋅ {w}_{i , j} .$

Der Index i bezieht sich auf den jeweiligen Knoten der ersten logischen Schicht S₁ und der Index j auf den Ziel-Knoten der zweiten logischen Schicht S₂.

So ist das vom obersten Knoten x_{1, 1} der ersten logischen Schicht S₁ an den obersten Knoten x_{1, 1} der zweiten logischen Schicht S2 gerichtete Signal mit dem Gewicht w_{1, 1} gewichtet. Für das an den dritten Knoten der zweiten logischen Schicht S₂ gerichtete Signal des obersten ersten Knotens x_{1, 1} hat dann entsprechend das Gewicht w_{1, 3}.

In der jeweiligen Empfangsschicht (wie beispielsweise der zweiten verborgenen logischen Schicht S₂) werden für jeden Knoten x_{i, 2} die empfangenen, gewichteten Signale aufsummiert. Dies kann mit der Formel beschrieben werden: ${x}_{j , 2} = {\sum }_{i = 1}^{N} {x}_{j , 2} ⋅ {w}_{j , 2}$

Der Index j entspricht dabei dem Index des jeweiligen Ziel-Knotens der zweiten Schicht S₂.

Die Knoten der zweiten logischen Schicht S₂ haben dabei am Eingang jeweils ein Empfangselement, wie beispielsweise eine Fotodiode oder einen Fototransistor, und am Ausgang eine Sendeeinheit, wie beispielsweise eine Leuchtdiode LED.

In der letzten Empfangsschicht, wie beispielsweise in der logischen Schicht S₃, werden die Anregungssignale jeweils für einen Knoten über einen gemeinsamen Durchlassbereich O geführt und dabei aufsummiert.

Da die Summierfunktion in dem gemeinsamen Durchlassbereich O zwischen den jeweiligen hintereinander angeordneten logischen Schichten S₁, S₂ bzw. S₂, S₃ vorgenommen wird, muss eine Zuordnung der Anregungssignale der Sendeknoten zu den jeweiligen Empfangsknoten vorgenommen werden.

Dies kann durch eine zeitschlitzgesteuerte Ansteuerung ("Time Division Multiplex Phase") über einen Taktgeber CU1 mit einem Takt an jeweilige Steuereinheiten CU2, CU3 in der nachgelagerten logischen Schicht S₁, S₃ erfolgen. Die Taktgeber CU1, CU2, CU3 bilden zusammen die Zuordnungseinheit Z. Die Empfangsschaltungen der einzelnen Empfangsknoten in der Empfangsschicht S₂ bzw. beim Senden vom S₂ auf S₃ in der Schicht S₃ werden dann jeweils nacheinander aktiviert, sodass immer nur der Empfang durch einen Empfangsknoten möglich ist. Die Sender im Knoten der vorgelagerten Schicht S₂ werden durch den Takt dann so angesteuert, dass die für die jeweiligen Empfangsknoten vorgesehenen Gewichte w _{i, j} ausgewählt werden, wenn der jeweilige Empfangsknoten aktiviert ist.

Die in der Skizze dargestellten einzelnen Verbindungsleitungen werden tatsächlich durch einen gemeinsamen Durchlassbereich, beispielsweise einen Hohlraum oder eine lichtleitende Platte oder Folie, realisiert, an die alle zugehörigen Sendeelemente LEDs und nachfolgende Empfangselemente gleichermaßen angeschlossen sind.

Alternativ zu dem dargestellten Zeit-Multiplex-Verfahren für die Zuordnung mittels der Zuordnungseinheit Z (Taktgeber CU1, CU2, CU3) können auch andere Zuordnungsverfahren genutzt werden.

So ist denkbar, dass die von den Sendeelementen an die nachfolgende Schicht emittierten Anregungssignale moduliert und von Empfangseinheiten in den Empfangsknoten der nachfolgenden Schichten wieder entsprechend demoduliert werden. Die einzelnen, jeweils von einem Empfangsknoten individuell gewichteten Signale können dabei z. B. frequenzmoduliert, phasenmoduliert, amplitudenmoduliert, wellenlängenmoduliert und/oder pulsmoduliert sein.

Die Zuordnung kann auch durch eine Wellenlängenabhängigkeit der einzelnen Anregungssignale vorgenommen werden. Hierzu eignen sich beispielsweise vertikal emittierende Laserdioden VICEL, deren Wellenlänge über die Temperatur und damit über den Ansteuerstrom variabel gesteuert werden kann.

Die zur Ansteuerung dienenden Gewichte w werden wie hinreichend bekannt trainiert. Sie können dann als nicht mehr veränderbare Parameter in der Schaltungsanordnung abgelegt werden, beispielsweise in einem DRAM-Speicher oder in einer Speicherkapazität, die mit dem jeweiligen Ansteuerungstransistor verbunden ist.

Die so abgespeicherten Gewichte können aber auch noch während des Betriebs der Schaltungsanordnung nachgelernt werden.

In dem Ausführungsbeispiel ist nur eine Kommunikationsrichtung beschrieben. Gleichermaßen kann die Schaltungsanordnung auch in umgekehrter Richtung betrieben werden, wenn die entsprechenden Knoten zur bidirektionalen Kommunikation ausgebildet sind. Auf der dargestellten Empfangsseiten müssten dann zusätzlich elektromagnetische Strahlung emittierende Sendeelemente und auf der dargestellten Sendeseite zusätzlich elektromagnetische Strahlung detektierende Empfangselemente an jedem Knoten enthalten sein. Es kann aber auch ein Duplizierung und Drehung des Netzes mit jeweils einer Knotenverbindung in Hin-Richtung und einer Verbindung von anderen Knoten in Rück-Richtung vorgesehen sein.

Das Prinzip der Summierung der Anregungssignale für jeweils einen Empfangsknoten mit über einen gemeinsamen Durchlassbereich und die Zuordnung der summierten gewichteten Anregungssignale mit einer Zuordnungseinheit bleibt auch bei der bidirektionalen Kommunikation erhalten und kann auch für die Rück-Kommunikation gleichermaßen angewendet werden.

## Patentansprüche

1. Schaltungsanordnung zur Verarbeitung von Signalen mit einem neuronalen Netz, das eine Vielzahl von Knoten hat, wobei jeweils eine Anzahl von Knoten eine gemeinsame logische Schicht bildet und jeder Knoten einer Gruppe von Knoten einer ersten logischen Schicht mit jedem Knoten einer Gruppe von Knoten einer benachbarten zweiten logischen Schicht verbunden ist, und wobei die Knoten der ersten logischen Schicht zur Emission elektromagnetischer Strahlung ausgebildete Sendeelemente und die Knoten der zweiten logischen Schicht zum Empfang elektromagnetischer Strahlung ausgebildete Empfangselemente haben,
**dadurch gekennzeichnet, dass**
- die Gruppe von Sendeelementen der ersten logischen Schicht mit der zugehörigen Gruppe von Empfangselementen der zweiten logischen Schicht über einen gemeinsamen, elektromagnetische Strahlung durchlassenden Durchlassbereich gekoppelt sind, um von den Sendeelementen jeweils emittierte Strahlung an alle angekoppelten Empfangselemente zu übertragen,
- die Sendeelemente mit einer Steuereinheit, die eine Charakteristik der emittierenden Strahlung durch ein gelerntes Gewicht vorgibt, verbunden sind, und
- eine erste Zuordnungseinheit mit den Steuereinheiten der Sendeelemente und eine zweite Zuordnungseinheit mit den Empfangselementen verbunden ist, wobei die Zuordnungseinheiten zur Sender-Zuordnung der von den Sendeelementen emittierten Signale bei den über den gemeinsamen Durchlassbereich für elektromagnetische Strahlung angekoppelten Empfangselementen eingerichtet sind,
- eine Gruppe von Sendeelementen und/oder Empfangselementen von Knoten einer logischen Schicht in einer zweidimensionalen Matrix auf einem Substrat angeordnet ist, wobei ein Substrat jeweils eine logische Schicht des neuronalen Netzes bildet und flächig übereinander gestapelte Substrate das neuronale Netz mit den miteinander verbundenen logischen Schichten bildet, und wobei
- der gemeinsame Durchlassbereich jeweils zwischen einem Paar von flächig aufeinanderliegenden Substraten angeordnet und durch einen Hohlraum mit Luftvolumen oder durch ein aus lichtleitendem Material gebildetes Optikelement gebildet ist.

2. Schaltungsanordnung nach Anspruch 1, **dadurch gekennzeichnet, dass** die erste Zuordnungseinheit zur Modulation der von den Sendeelementen emittierten Signale und die zweite Zuordnungseinheit zur Demodulation der von den Empfangseinheiten empfangenen modulierten Signale eingerichtet ist.

3. Schaltungsanordnung nach Anspruch 2, **dadurch gekennzeichnet, dass** die erste Zuordnungseinheit zur Frequenzmodulation, Phasenmodulation, Amplitudenmodulation, Wellenlängenmodulation oder Pulsmodulation eingerichtet ist.

4. Schaltungsanordnung nach Anspruch 1, **dadurch gekennzeichnet, dass** die erste Zuordnungseinheit zur Multiplex-Ansteuerung der Sendeelemente und die zweite Zuordnungseinheit zu einer der Multiplex-Ansteuerung korrespondierenden Demultiplex-Auswertung der von den Empfangselementen erfassten Signale eingerichtet ist.

5. Schaltungsanordnung nach einem der vorhergehenden Ansprüche, **dadurch gekennzeichnet, dass** die Zuordnungseinheiten und daran angeschlossenen Sendeeinheiten zur wellenlängenabhängigen Zuordnung der von jeweils einer Sendeeinheit emittierten Signale bei den Knoten, die über den gemeinsamen Durchlassbereich für elektromagnetische Strahlung angekoppelte Empfangseinheiten haben, eingerichtet sind, wobei die Sendeeinheiten Leuchtdioden oder Laserdioden, insbesondere vertikal emittierende Laserdioden (VCSEL - Vertical Cavity Surface Emitting Laser) sind.

6. Schaltungsanordnung nach einem der vorhergehenden Ansprüche, **dadurch gekennzeichnet, dass** die Steuereinheit eine Vielzahl von Ansteuerungstransistoren hat, wobei jeweils ein Ansteuerungstransistor an ein zugehöriges Sendeelement angeschlossen ist, um in Abhängigkeit von der/dem an dem Ansteuerungstransistor anliegenden Steuerspannung oder Steuerstrom und der Transistorkennlinie Charakteristika der Emission der Signale zu steuern.

7. Schaltungsanordnung nach Anspruch 6, **dadurch gekennzeichnet, dass** die Steuereinheit einen Speicher hat, um die als angelernte Gewichte für den jeweiligen Knoten zur Ansteuerung der zugehörigen Ansteuerungstransistoren genutzten Steuerspannungen oder Steuerströme abzuspeichern.

8. Schaltungsanordnung nach Anspruch 7, **dadurch gekennzeichnet, dass** die angelernten Gewichte als Steuerspannung jeweils in einer Speicherkapazität abgespeichert sind, die mit dem zugehörigen Ansteuerungstransistor verbunden ist.

9. Schaltungsanordnung nach Anspruch 7, **dadurch gekennzeichnet, dass** die angelernten Gewichte in einem DRAM-Speicher abgespeichert sind.

10. Schaltungsanordnung nach einem der vorhergehenden Ansprüche, **dadurch gekennzeichnet, dass** die Steuereinheit zur Pulsweitenmodulation (PWM) der jeweils an die Steuereinheit angeschlossenen Sendeelemente eingerichtet ist.

11. Schaltungsanordnung nach einem der vorhergehenden Ansprüche, **dadurch gekennzeichnet, dass** mindestens eine Schicht jeweils Knoten mit jeweils einem Paar von Sendeelementen und Empfangselementen hat, die in einander gegenüberliegende Richtungen an jeweils einen Durchlassbereich für elektromagnetische Strahlung angekoppelt sind und zur gewichteten Weiterleitung der von dem Empfangselement empfangenen Signale über das Sendeelement und den daran angekoppelten Durchlassbereich an mindestens ein Empfangselement einer benachbarten Schicht zusammengeschaltet sind.

12. Schaltungsanordnung nach einem der vorhergehenden Ansprüche, **dadurch gekennzeichnet, dass** das neuronale Netz zur bidirektionalen Signalübertragung Knoten der ersten Schicht mit jeweils einem Sendeelement und einem Empfangselement, die an denselben Durchlassbereich angekoppelt sind, und Knoten der zweiten Schicht mit jeweils einem Empfangselement und einem Sendeelement haben.

13. Schaltungsanordnung nach einem der vorhergehenden Ansprüche, **dadurch gekennzeichnet, dass** das neuronale Netz mindestens eine Schicht hat, die über die an einen gemeinsamen Durchlassbereich für elektromagnetische Strahlung an eine benachbarte Schicht angekoppelte Gruppe von Knoten hinaus noch mindestens einen weiteren Knoten hat, der mit einem weiteren Durchlassbereich für elektromagnetische Strahlung lichtleitend mit der benachbarten Schicht verbunden ist.

14. Schaltungsanordnung nach einem der vorhergehenden Ansprüche, **dadurch gekennzeichnet, dass** die Knoten einer Eingangsschicht elektrische Anschlüsse für elektrische Eingangssignale haben, die zur gewichteten Ansteuerung der jeweils daran angeschlossenen Sendeelemente dienen, und/oder die Knoten einer Ausgangsschicht mit jeweils einem zugehörigen Empfangselement elektrisch verbundene Anschlüsse für elektrische Ausgangssignale haben.

15. Schaltungsanordnung nach einem der vorhergehenden Ansprüche, **dadurch gekennzeichnet, dass** das den gemeinsamen Durchlassbereich bildende Optikelement eine Folie oder Platte aus einem für die von den Sendeelementen emittierte Strahlung durchlässigem Material ist.

16. Schaltungsanordnung nach einem der vorhergehenden Ansprüche, **dadurch gekennzeichnet, dass** zwischen einem Paar von flächig aufeinanderliegenden Substraten jeweils eine das Optikelement des gemeinsamen Durchlassbereiches bildende strahlungsdurchlässige Folie angeordnet ist.

## Claims

1. A circuit arrangement for processing signals using a neural network having a plurality of nodes, wherein a number of nodes form a common logical layer, and each node of a group of nodes of a first logical layer is connected to each node of a group of nodes in an adjacent second logical layer, and wherein the nodes of the first logical layer have transmitting elements configured to emit electromagnetic radiation, and the nodes of the second logical layer have receiving elements configured to receive electromagnetic radiation, **characterized in that**
- the group of transmitting elements of the first logical layer is coupled to the corresponding group of receiving elements of the second logical layer via a common passage that transmits electromagnetic radiation, in order to transmit radiation emitted by the transmitting elements to all coupled receiving elements,
- the transmitting elements are connected to a control unit that specifies a characteristic of the emitted radiation via a learned weight, and
- a first assignment unit is connected to the control units of the transmitting elements and a second assignment unit is connected to the receiving elements, wherein the assignment units are configured to assign the signals emitted by the transmitting elements to the receiving elements coupled via the common passage for electromagnetic radiation arranged,
- a group of transmitting elements and/or receiving elements of nodes of a logical layer is arranged in a two-dimensional matrix on a substrate, wherein each substrate forms a logical layer of the neural network and substrates stacked flat on top of one another form the neural network with the interconnected logical layers, and wherein
- the common passage is arranged between a pair of substrates lying flat on top of one another and is formed by a cavity containing a volume of air or by an optical element made of light-conducting material.

2. A circuit arrangement according to claim 1, **characterized in that** the first assignment unit is configured to modulate the signals emitted by the transmitting elements, and the second assignment unit is configured to demodulate the modulated signals received by the receiving units.

3. A circuit arrangement according to claim 2, **characterized in that** the first assignment unit is configured for frequency modulation, phase modulation, amplitude modulation, wavelength modulation, or pulse modulation.

4. A circuit arrangement according to claim 1, **characterized in that** the first assignment unit is configured for multiplex control of the transmitting elements, and the second assignment unit is configured for demultiplex evaluation of the signals detected by the receiving elements corresponding to the multiplex control.

5. A circuit arrangement according to one of the preceding claims, **characterized in that** the assignment units and the transmitting units connected thereto are configured for wavelength-dependent assignment of the signals emitted by a respective transmitting unit at the nodes that have receiving units coupled via the common passage for electromagnetic radiation, wherein the transmitting units are light-emitting diodes or laser diodes, in particular vertical-cavity surface-emitting lasers (VCSEL - Vertical Cavity Surface Emitting Laser).

6. A circuit arrangement according to one of the preceding claims, **characterized in that** the control unit has a plurality of drive transistors, wherein a respective drive transistor is connected to an associated transmitting element to control the characteristics of signal emission as a function of the control voltage or control current applied to the drive transistor and the transistor characteristic curve.

7. A circuit arrangement according to claim 6, **characterized in that** the control unit has a memory for storing the control voltages or control currents used as learned weights for the respective node to drive the associated drive transistors.

8. A circuit arrangement according to claim 7, **characterized in that** the learned weights are stored as control voltages in a storage capacitor connected to the respective drive transistor.

9. A circuit arrangement according to claim 7, **characterized in that** the learned weights are stored in a DRAM memory.

10. A circuit arrangement according to one of the preceding claims, **characterized in that** the control unit is configured for pulse width modulation (PWM) of the transmitting elements connected to the control unit.

11. A circuit arrangement according to any of the preceding claims, **characterized in that** at least one layer has nodes, each with a pair of transmitting elements and receiving elements, which are coupled in opposite directions to a respective passage for electromagnetic radiation and are configured for the weighted forwarding of the signals received by the receiving element via the transmitting element and the passage coupled thereto with at least one receiving element of an adjacent layer.

12. A circuit arrangement according to any of the preceding claims, **characterized in that** the neural network for bidirectional signal transmission comprises nodes of the first layer, each having a transmitting element and a receiving element coupled to the same passage, and nodes of the second layer, each having a receiving element and a transmitting element.

13. A circuit arrangement according to any of the preceding claims, **characterized in that** the neural network has at least one layer which, in addition to the group of nodes coupled to an adjacent layer via a common passage for electromagnetic radiation, has at least one further node that is optically connected to the adjacent layer via a further passage for electromagnetic radiation.

14. A circuit arrangement according to any of the preceding claims, **characterized in that** the nodes of an input layer have electrical connections for electrical input signals, which serve to provide weighted control of the respective transmitting elements connected thereto, and/or the nodes of an output layer have connections for electrical output signals that are electrically connected to a respective receiving element.

15. A circuit arrangement according to any of the preceding claims, **characterized in that** the optical element forming the common passage is a film or plate made of a material transparent to the radiation emitted by the transmitting elements.

16. A circuit arrangement according to one of the preceding claims, **characterized in that** a radiation-transmissive film, each forming the optical element of the common passage, is arranged between a pair of substrates lying flat on top of one another.

## Revendications

1. Circuit destiné au traitement de signaux à l'aide d'un réseau neuronal comportant une pluralité de nœuds, dans lequel un certain nombre de nœuds forment chacun une couche logique commune et chaque nœud d'un groupe de nœuds d'une première couche logique est connecté à chaque nœud d'un groupe de nœuds d'une deuxième couche logique adjacente, et dans lequel les nœuds de la première couche logique comportent des éléments émetteurs conçus pour émettre un rayonnement électromagnétique et les nœuds de la deuxième couche logique comportent des éléments récepteurs conçus pour recevoir un rayonnement électromagnétique,
**caractérisé en ce que**
- le groupe d'éléments émetteurs de la première couche logique est couplé au groupe correspondant d'éléments récepteurs de la deuxième couche logique par l'intermédiaire d'une zone de transmission commune laissant passer le rayonnement électromagnétique, afin de transmettre le rayonnement émis respectivement par les éléments émetteurs à tous les éléments récepteurs couplés,
- les éléments d'émission sont reliés à une unité de commande qui définit une caractéristique du rayonnement émis à l'aide d'un poids appris, et
- une première unité d'affectation est reliée aux unités de commande des éléments d'émission et une deuxième unité d'affectation est reliée aux éléments de réception, les unités d'affectation servant à l'affectation des émetteurs des signaux émis par les éléments d'émission aux éléments de réception couplés via la zone de transmission commune pour le rayonnement électromagnétique disposés,
- un groupe d'éléments émetteurs et/ou récepteurs de nœuds d'une couche logique est disposé selon une matrice bidimensionnelle sur un substrat, chaque substrat formant une couche logique du réseau neuronal et des substrats empilés les uns sur les autres à plat formant le réseau neuronal avec les couches logiques interconnectées, et dans lequel
- la zone de passage commune est disposée à chaque fois entre une paire de substrats superposés à plat et est formée par une cavité contenant du volume d'air ou par un élément optique constitué d'un matériau conducteur de lumière.

2. Circuit selon la revendication 1, **caractérisé en ce que** la première unité d'affectation est agencée pour moduler les signaux émis par les éléments émetteurs et la deuxième unité d'affectation est agencée pour démoduler les signaux modulés reçus par les unités de réception.

3. Circuit selon la revendication 2, **caractérisé en ce que** la première unité d'affectation est agencée pour effectuer une modulation de fréquence, une modulation de phase, une modulation d'amplitude, une modulation de longueur d'onde ou une modulation d'impulsions.

4. Circuit selon la revendication 1, **caractérisé en ce que** la première unité d'affectation est conçue pour la commande multiplex des éléments d'émission et la deuxième unité d'affectation pour une analyse démultiplex correspondant à ladite commande multiplex des signaux détectés par les éléments de réception.

5. Circuit selon l'une des revendications précédentes, **caractérisé en ce que** les unités d'affectation et les unités d'émission qui y sont raccordées sont conçues pour l'affectation, en fonction de la longueur d'onde, des signaux émis par une unité d'émission respective au niveau des nœuds qui comportent des unités de réception couplées via la zone de passage commune pour le rayonnement électromagnétique, les unités d'émission étant des diodes électroluminescentes ou des diodes laser, en particulier des diodes laser à émission verticale (VCSEL - Vertical Cavity Surface Emitting Laser).

6. Circuit selon l'une des revendications précédentes, **caractérisé en ce que** l'unité de commande comporte une pluralité de transistors de commande, un transistor de commande étant respectively connecté à un élément d'émission associé afin de commander les caractéristiques d'émission des signaux en fonction de la tension ou du courant de commande appliqué(e) au transistor de commande et de la courbe caractéristique du transistor.

7. Circuit selon la revendication 6, **caractérisé en ce que** l'unité de commande comporte une mémoire destinée à stocker les tensions ou courants de commande utilisés comme poids appris pour le nœud concerné afin de commander les transistors de commande associés.

8. Circuit selon la revendication 7, **caractérisé en ce que** les poids appris sont stockés sous forme de tension de commande dans une capacité de stockage respectivement reliée au transistor de commande correspondant.

9. Circuit selon la revendication 7, **caractérisé en ce que** les poids appris sont stockés dans une mémoire DRAM.

10. Circuit selon l'une des revendications précédentes, **caractérisé en ce que** l'unité de commande est agencée pour effectuer une modulation de largeur d'impulsion (PWM) des éléments d'émission respectivement connectés à l'unité de commande.

11. Circuit selon l'une des revendications précédentes, caractérisé en qu'au moins une couche comporte des nœuds comportant chacun une paire d'éléments émetteurs et d'éléments récepteurs, qui sont couplés dans des directions opposées à une zone de passage respective pour le rayonnement électromagnétique et qui sont destinés à la transmission pondérée des signaux reçus par l'élément récepteur via l'élément émetteur et la zone de passage qui y est couplée avec au moins un élément récepteur d'une couche adjacente.

12. Circuit selon l'une des revendications précédentes, **caractérisé en ce que** le réseau neuronal destiné à la transmission bidirectionnelle de signaux comporte, dans la première couche, des nœuds dotés chacun d'un élément d'émission et d'un élément de réception couplés à la même zone de passage, et, dans la deuxième couche, des nœuds dotés chacun d'un élément de réception et d'un élément d'émission.

13. Circuit selon l'une des revendications précédentes, **caractérisé en ce que** le réseau neuronal comporte au moins une couche qui, outre le groupe de nœuds couplés à une couche adjacente par l'intermédiaire d'une zone de passage commune pour le rayonnement électromagnétique, comporte encore au moins un autre nœud qui est relié de manière optiquement conductrice à la couche adjacente par l'intermédiaire d'une autre zone de passage pour le rayonnement électromagnétique.

14. Circuit selon l'une des revendications précédentes, **caractérisé en ce que** les nœuds d'une couche d'entrée comportent des connexions électriques pour des signaux d'entrée électriques, qui servent à la commande pondérée des éléments émetteurs respectivement qui y sont raccordés, et/ou **en ce que** les nœuds d'une couche de sortie comportent des connexions pour des signaux de sortie électriques, respectivement reliées électriquement à un élément récepteur associé.

15. Circuit selon l'une des revendications précédentes, **caractérisé en ce que** l'élément optique formant la zone de transmission commune est une feuille ou une plaque constituée d'un matériau transparent au rayonnement émis par les éléments émetteurs.

16. Circuit selon l'une des revendications précédentes, **caractérisé en ce qu'**une feuille perméable au rayonnement, formant l'élément optique de la zone de transmission commune, est disposée entre chaque paire de substrats superposés à plat.
